# EUROPEAN PATENT SPECIFICATION

(11) **EP 0 579 882 B1**
(45) Date of publication and mention of the grant of the patent: **15.09.1999**
(21) Application number: 92306799.5
(22) Date of filing: 24.07.1992
(51) Int. Cl.: B60Q 3/04

(54) **Indicator**
Indikator
Indicateur

(43) Date of publication of application: 26.01.1994
(73) Proprietor: NISSAN EUROPEAN TECHNOLOGY CENTRE LIMITED, Sunderland, Tyne & Wear SR5 3ND (GB); Hella KG Hueck & Co., 59552 Lippstadt (DE)
(72) Inventor: Klein, Hans-Joachim, W-4780 Lippstadt (DE); Ahmed, Mahmoud, Buckingham Buckinghamshire MK18 7HJ (GB)
(74) Representative: Waldren, Robin Michael

(56) References cited:
- DE-A- 3 228 932
- DE-A- 3 533 056
- GB-A- 2 169 739

## Description

The present invention relates to an indicator, especially although not exclusively suited to use as part of an electrical or electronic control element such as a switch, more especially for use in a vehicle. However, it could equally be used as a readout for a piece of electronic equipment or even for a public information display or the like.

In modern vehicles it is common to provide many controls on the dashboard, eg. for operating the vehicle headlamps and other exterior lighting, as well as for headlamp levelling systems. Conveniently, such control elements may be in the form of a rotary switch or similar.

For operation at low light levels, especially at night, it is usual to provide some kind of illuminated indicator so that the driver can see the setting of a particular control element. Such an arrangement typically incorporates a plurality of lamps and means is provided to screen or uncover one lamp at a time, according to the setting of the control.

Problems with such known illuminated indicators include bulk, excessive power consumption and dissipation of heat, and tendency to relatively frequent failure. If an indicator has a plurality of lamps, failure of one at any one time becomes more likely, the more lamps there are provided.

Corresponding to the preamble of claim 1, prior art document DE-35 33 056 A1 discloses an indicator arrangement having an illuminated display panel and a switch. A light source is provided behind the display panel and a light guide transmits light from the source to a window in the panel to illuminate it. Rotation of the switch causes corresponding rotation of the light guide so as to illuminate another window in the panel. However, the light source is positioned parallel to, but apart from, the axis of rotation of the switch. It is therefore, necessary to provide a large cavity between the light guide and the light source. The prior art arrangement has a relatively complex structure, therefore, and can be very large in some applications.

Prior art document DE-32 28 932-A1 also discloses an indicator arrangement having an illuminated display panel and a switch. A light source and light guide are mounted together to form a unit which is moveable by means of the switch. The light source and light guide are fixed relative to each other. However, since the light source is required to move within the indicator housing, the power supply connections thereto are relatively complicated and require numerous components.

We have now devised a new form of indicator which mitigates or overcomes the aforementioned problems with the known illuminated indicators. Thus, the present invention provides an indicator comprising a casing having a front face provided with a display to be illuminated, the indicator further comprising a light source, a light guide for conveying light from the light source to the display and a rotary switch unit having a rotary wiper arm moveable about an axis for moving the light guide, the switch unit comprising a rotary knob with a spindle extending into the casing, the spindle being fixed to the rotary wiper arm, the rotary knob extending from the front face of the casing and the display being spaced apart from the rotary knob at the front face of the casing, characterized in that the light source is mounted in the casing in a fixed position in line with but spaced apart from the spindle and on the axis about which the rotary wiper arm of the switch unit is moveable, the light guide being arranged in a slanted channel within the rotary wiper arm of the switch unit such that the light guide is moveable relative to the light source, and in that at least one end of the light guide facing the light source is approximately fixed relative to the light source and the opposite end of the light guide is moveable relative to the display.

Preferably, the display is arranged to be illuminated from behind by the light guide. However, the present invention also encompasses other arrangements such as where the light guide is arranged to illuminate the display from the front, ie. from the side from which it is viewed during normal use.

The indicator may for example comprise a plurality of discrete windows. These windows could be merely dots arranged in any pattern, eg. linear or arcuate. Optionally, the dots may be designated by numerals or other information marked on the front face.

It is also possible to have discrete windows shaped in the form of letters, numerals or other information, again arranged in a linear, arcuate or any other pattern.

Instead of providing discrete windows, it is also, for example, possible to provide the display with a continuous strip-shaped window. Such a strip-shaped window may be in the form of a straight or curved strip, or of any other appropriate shape, eg. circular. Positions on the strip may be designated by adjacent letters, numerals or other information marked on the facia. Alternatively, opaque gradations, marking or other information may be made direct on the strip window itself to become apparent when illuminated.

Where the display comprises one or more windows, they must be transparent or translucent in order to transmit the light shining on them from the light guide situated behind. Optionally, they may comprise one or more coloured filter units of the same or different colours, eg. for indicating the significance of different parts of the display.

It is possible to provide the light guide in the form of a rigid tube, eg. of glass or of a polymer material such as perspex. Although it is possible to rely on internal reflection in order for the light guide to transmit light, it is also possible to provide such a rigid light guide with a reflective internal or external coating, or with a varying refractive index so as to maximise light transmission.

Such a rigid tube light guide may be straight or totally or partially curved or in any convenient shape. In a preferred embodiment, one end of such a rigid tube is arranged to be approximately fixed relative to the light source and the means for moving the light guide is arranged to move a rigid tube in a generally acuate path so that the second end of the rigid tube remote from said one end traverses the display. In such an arrangement, it is especially preferred for the rigid tube light guide to be substantially straight along the majority of its length and to be provided with a bend at said second end.

It is also possible to provide the light guide in the form of an optical fibre, especially a flexible optical fibre.

In such a case, one end of the optical fibre may be arranged to be approximately or substantially fixed relative to the light source and the means for moving the light guide, arranged to bend the optical fibre so that a second end of the optical fibre remote from said one end moves to traverse the display.

The light source may be of any kind appropriate to the intended use of the indicator according to the present invention. For example, it may comprise an incandescent bulb, a light emitting diode or even a laser, especially a semiconductor laser.

Where the indicator according to the present invention is intended to form part of, or cooperate with a control element of an electrical or electronic control element, the means for moving the light guide will usually be associated with a user-manipulated part of said control element. The manipulated part may for example, be the knob of a rotary switch, eg. a multi-position switch or a rotary potentiometer.
Of course, the indicator may also be used with a potentiometer. It may also be used with other forms of control elements such as variable capacitors or the like.

As described hereinbelow, a preferred embodiment comprises a rotary switch unit for a headlamp levelling system of a motor vehicle. However, indicators according to the present invention are particularly suited for many kinds of control elements, switches, potentiometers and the like, situated in the interior of motor vehicles. These may be for operation of not only headlamp levelling, but overall control of the exterior and interior lighting, windscreen wipers, de-misting systems, air-conditioning, electric windows, alarm systems and various other electrically operated systems provided in modern motor vehicles for convenience of the driver or passengers.

The present invention will now be explained in more detail by the following description of a preferred but non-limiting embodiment and with reference to the accompanying drawings in which: -
Figure 1 shows a front view of a rotary switch incorporating an indicator according to the present invention, for use in a headlamp levelling system of a vehicle;
Figure 2 shows a cross-section through the front view of the switch unit shown in Figure 1;
Figure 3 shows a cross-section through a side view and
Figure 4 shows a cross-section through an end-view of the switch unit shown in Figure 1; and
Figures 5A-5D are contact diagrams showing interconnections of the switch contacts of the switch unit shown in Figure 1, when in first-fourth positions.

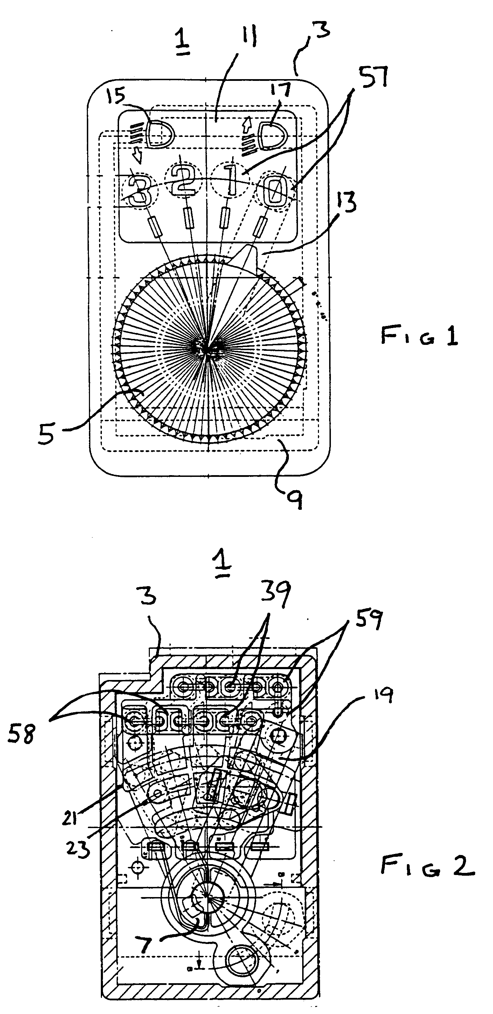

Figures 1-4 show a rotary switch unit 1 suitable for use as part of a vehicle headlamp levelling system. The switch unit is mounted on the dashboard of a vehicle. The switch unit 1 comprises a moulded casing 3 provided with a rotary knob 5 integral with a spindle 7.

As can be seen particularly from Figure 1, the knob surrounds a front face 9 provided with an illuminated indicator display 11. The display is marked with four switch positions (0)(1)(2)(3) indicated by a pointer 13, each switch position signifying a particular position of headlamp level. A pair of symbols 15, 17 respectively indicate headlamp movement down or up, according to the switch position.

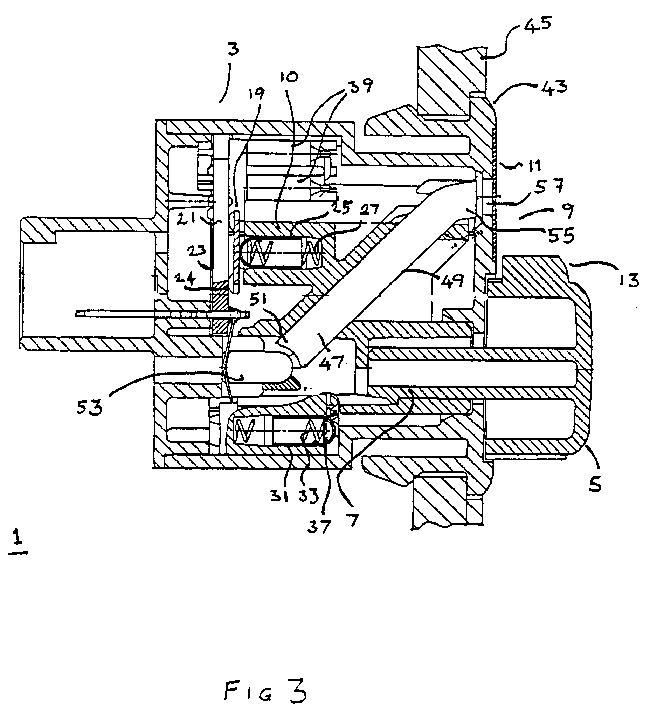

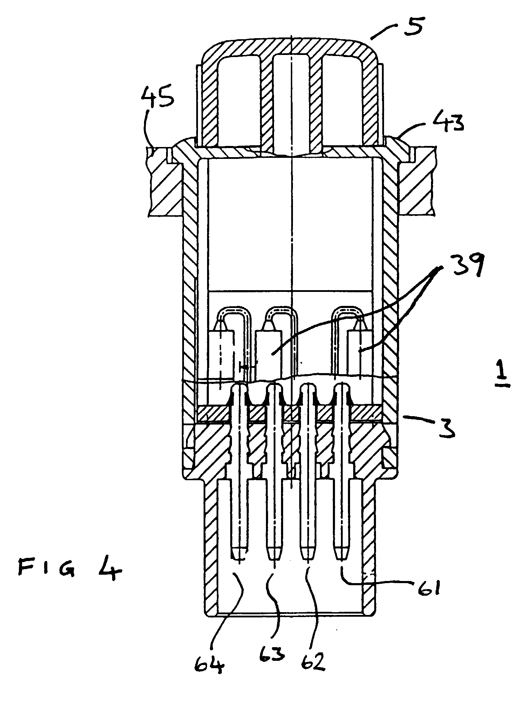

As shown in Figures 2 and 3, the spindle 7 is fixed to a rotary wiper arm 10 which is provided with a wiper contact 19. The wiper contact 19 contacts, respectively, with left-hand and right-hand contacts 21, 23 and a common contact 24 arranged in concentric areas in wafer fashion beneath the wiper contact.

The wiper contact is urged against the common contact 24 and against the relevant left and right contacts by a nipple 25 under the downward bias of a compression spring 27 (refer to Figure 3). At the same time, a second nipple 31 is upwardly biased by a second compression spring 33, against a cam surface 37 on the underside of the knob. The cam surface is provided with a series of notches defining the switch positions as the knob is turned.

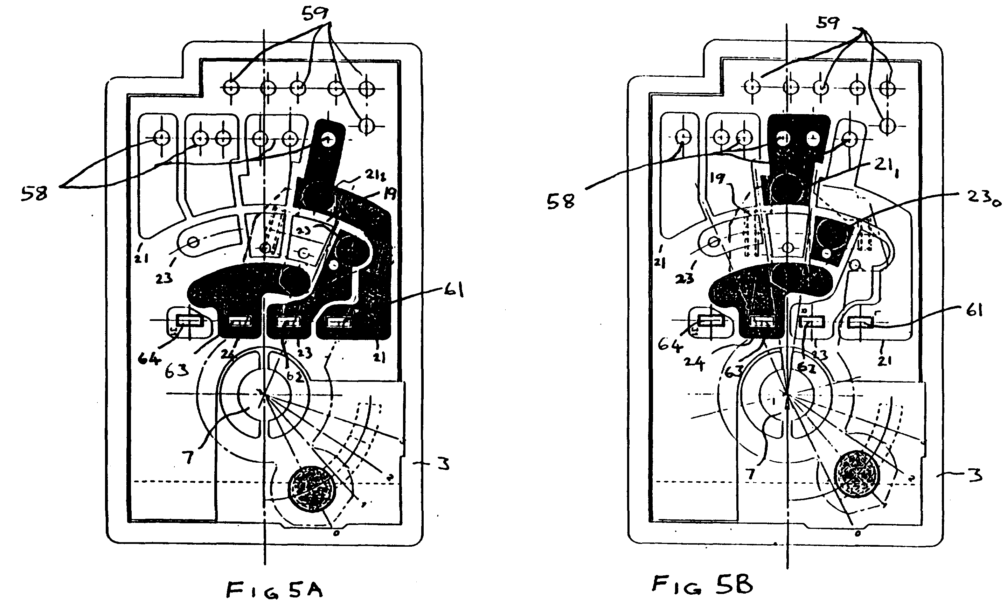

The left, and right contacts 21 and 23 are each provided with a chain of resistors 39 which terminate in external pins 61 and 62 at the other end (see Figure 4) for connection to a headlamp levelling control circuit (not shown). The reference numerals 58 and 59 denote terminals which connect the individual resistors 39 in chains for the left and right contacts 21 and 23 respectively. The resistors 39 are connected so that the total value of resistors in the chain varies in accordance with the position of the wiper contact ie. the switch position. The pin 63 is a terminal for connection to a battery used to power the control circuit and a light source 53. The light source 53 is also connected to an on-off switch (not shown) which may be linked to and operated by the main switch for the headlamps.

The light source forms part of the indicator in accordance with the present invention. However, the resistors form part of a pair of switched potential dividers which control operation of the control circuit in accordance with the switch position. However, as this operation is not pertinent to the present invention, no further details are given here.

The switch unit is also provided with a flange 43 adjacent the facia for flush mounting on the vehicle dash 45.

Referring again to Figure 3, to assist the switch position to be read under the low intensity lighting conditions which usually pertain when the headlamps are in use, a light-pipe 47 of the indicator in accordance with the present invention is arranged in a slanted channel 49 within the switch assembly. One (the lower) end 51 of the light pipe faces the light source 53 such as a bulb or LED. The opposite (upper) end 55 of the light pipe faces a respective window 57 etc. in the facia over which windows are respectively disposed the numerals (0)(1)(2)(3) denoting the switch positions.

As the knob is rotated, the channel and light pipe rotate with it, back-lighting the relevant numeral for the selected switch position.

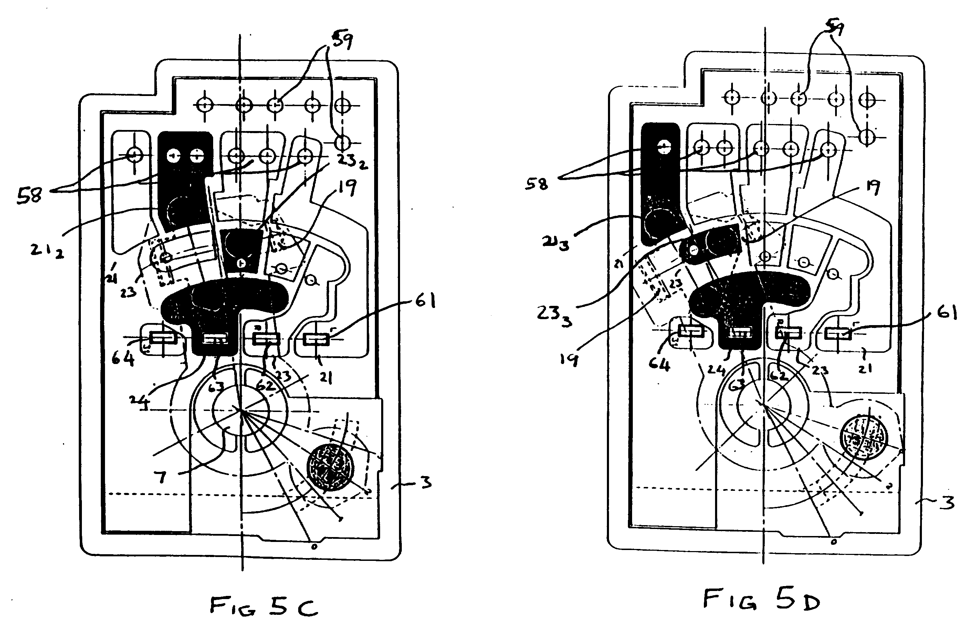

Operation of the switch will now be explained with reference to Figures 5A-5D.

The wiper contact 19 is shown in phantom. The dark areas are respectively the areas of the contacts electrically interconnected by the wiper arm in the various switch positions.

As shown in Figure 5A (corresponding to switch position (0)), the common contact 24 makes contact with first and second left and right contacts (21ₒ, 23ₒ) respectively. Figures 5B-5C show how progressive turning of the knob to positions (1), (2) and (3) respectively connects the common contact with the second, third and fourth left and right contacts (21₁, 23₁), (21₂, 23₂) and (21₃, 23₃).

However, it can be seen that the broad shape of the wiper contact in the vicinity of the left and right contacts means that the second left and right contacts will be connected to the common contact before contact is broken between the first left and right contacts and the common contact, and so on, across the range of switch positions.

At each selected switch position, the corresponding signal is output at the terminals 61 and 62 which may be used to control the left and right hand headlamp levelling system respectively and at the same time the selected position is indicated at the window 57.

In the light of this disclosure, modifications of the described embodiment as well as other embodiments, all within the scope of the present invention as defined by the appended claims, will now be apparent to persons skilled in the art.

## Claims

1. An indicator comprising a casing (3) having a front face (9) provided with a display (11) to be illuminated, the indicator further comprising a light source (53), a light guide (47) for conveying light from the light source (53) to the display (11) and a rotary switch unit (1) having a rotary wiper arm (10) moveable about an axis for moving the light guide (47), the switch unit (1) comprising a rotary knob (5) with a spindle (7) extending into the casing (3), the spindle (7) being fixed to the rotary wiper arm (10), the rotary knob (5) extending from the front face (9) of the casing (3) and the display (11) being spaced apart from the rotary knob (5) at the front face (9) of the casing (3), characterized in that the light source (53) is mounted in the casing (3) in a fixed position in line with but spaced apart from the spindle (7) and on the axis about which the rotary wiper arm (10) of the switch unit (1) is moveable, the light guide (47) being arranged in a slanted channel (47) within the rotary wiper arm (10) of the switch unit (1) such that the light guide (47) is moveable relative to the light source (53), and in that at least one end (51) of the light guide (47) facing the light source (53) is approximately fixed relative to the light source (53) and the opposite end (55) of the light guide (47) is moveable relative to the display (11).

2. An indicator as claimed in claim 1, wherein the display (11) is arranged to be illuminated from behind by the light guide (47).

3. An indicator as claimed in claim 2, wherein the display (11) comprises a plurality of discrete windows (57).

4. An indicator according to claim 2, wherein the display (11) comprises a continuous strip-shaped window.

5. An indicator according to any preceding claim, wherein the light guide comprises a rigid tube (49).

6. An indicator according to claim 5, wherein the rigid tube (49) is provided with a reflective internal or external coating.

7. An indicator according to claim 5, wherein the light guide (47) is provided with a refractive index which varies between the centre of the tube (49) to the exterior surface of the tube (49).

8. An indicator according to claim 5, 6 or 7, wherein one end of the rigid tube (49) is approximately fixed relative to the light source (53), and the switch unit (1) for moving the light guide (47) is arranged to move the rigid tube (49) in a generally arcuate path so that a second end of the rigid tube (49) remote from said one end, traverses the display (11).

9. An indicator according to any of claims 1-4, wherein the light guide (47) is an optical fibre.

10. An indicator according to claim 9, wherein the optical fibre is flexible.

11. An indicator according to claim 10, wherein one end of the optical fibre is approximately fixed relative to the light source (53) and the switch unit (1) for moving the light guide (47) bends the optical fibre so that a second end of the optical fibre remote from said one end moves to traverse the display (11).

12. A rotary switch comprising an indicator according to any preceding claim.

13. A rotary potentiometer comprising an indicator according to any of claims 1 - 11.

## Patentansprüche

1. Indikator, der ein Gehäuse (3) aufweist, das eine vordere Fläche (9) hat, die mit einem zu erleuchtenden Display (11) versehen ist, wobei der Indikator weiterhin eine Lichtquelle (53), eine Lichtführung (47), um Licht von der Lichtquelle (53) nach dem Display (11) zu leiten, und eine Drehschaltereinheit (1), die einen Drehschleifarm (10) hat, der um eine Achse bewegbar ist, um die Lichtführung (47) zu bewegen, aufweist, wobei die Schaltereinheit (1) einen Drehknopf (5) mit einer Spindel (7) aufweist, die sich in das Gehäuse (3) erstreckt, die Spindel (7) an dem Drehschleifarm (10) befestigt ist, der Drehknopf (5) von der vorderen Fläche (9) des Gehäuses (3) ausgeht, und das Display (11) in einem gewissen Abstand von dem Drehknopf (5) auf der vorderen Fläche (9) des Gehäuses (3) angeordnet ist, dadurch gekennzeichnet, daß die Lichtquelle (53) in dem Gehäuse (3) in einer festen Position in einer Linie mit der Spindel (7), aber in einem gewissen Abstand davon, und in der Achse, um die der Drehschleifarm (10) der Schaltereinheit (1) bewegbar ist, angebracht ist, wobei die Lichtführung (47) in einem schrägen Kanal (47) innerhalb des Drehschleifarms (10) der Schaltereinheit (1) so angeordnet ist, daß die Lichtführung (47) relativ zu der Lichtquelle (53) bewegbar ist, und daß mindestens ein Ende (51) der Lichtführung (47), das der Lichtquelle (53) gegenüberliegt, relativ zu der Lichtquelle (53) nahezu fest ist, und das entgegengesetzte Ende (55) der Lichtführung (47) relativ zu dem Display (11) bewegbar ist.

2. Indikator wie in Anspruch 1 beansprucht, wobei das Display (11) ausgelegt ist, um durch die Lichtführung (47) von hinten erleuchtet zu werden.

3. Indikator wie in Anspruch 2 beansprucht, wobei das Display (11) eine Vielzahl von einzelnen Fenstern (57) aufweist.

4. Indikator gemäß Anspruch 2, wobei das Display (11) ein kontinuierliches, streifenförmiges Fenster aufweist.

5. Indikator gemäß irgendeinem vorhergehenden Anspruch, wobei die Lichtführung ein starres Rohr (49) aufweist.

6. Indikator gemäß Anspruch 5, wobei das starre Rohr (49) mit einer reflektierenden inneren oder äußeren Beschichtung versehen ist.

7. Indikator gemäß Anspruch 5, wobei die Lichtführung (47) einen Brechungsindex hat, der zwischen der Mitte des Rohrs (49) und der äußeren Oberfläche des Rohrs (49) variiert.

8. Indikator gemäß Anspruch 5, 6 oder 7, wobei ein Ende des starren Rohrs (49) relativ zu der Lichtquelle (53) nahezu fest ist, und die Schaltereinheit (1) zum Bewegen der Lichtführung (47) ausgelegt ist, um das starre Rohr (49) auf einer im allgemeinen bogenförmigen Bahn so zu bewegen, daß das fern von dem einen Ende gelegene, zweite Ende des starren Rohrs (49) über das Display (11) hinweg bewegt wird.

9. Indikator gemäß irgendeinem der Ansprüche 1-4, wobei die Lichtführung (47) eine Lichtleitfaser ist.

10. Indikator gemäß Anspruch 9, wobei die Lichtleitfaser flexibel ist.

11. Indikator gemäß Anspruch 10, wobei ein Ende der Lichtleitfaser relativ zu der Lichtquelle (53) nahezu fest ist, und die Schaltereinheit (1) zum Bewegen der Lichtführung (47) die Lichtleitfaser so biegt, daß das fern von dem einen Ende gelegene, zweite Ende der Lichtleitfaser über das Display (11) hinweg bewegt wird.

12. Drehschalter, der einen Indikator gemäß irgendeinem vorhergehenden Anspruch aufweist

13. Drehpotentiometer, das einen Indikator gemäß irgendeinem der Ansprüche 1-11 aufweist.

## Revendications

1. Indicateur comprenant un boîtier (3) ayant une face avant (9) comportant un affichage (11) à éclairer, l'indicateur comprenant en outre une source de lumière (53), un guide de lumière (47) pour acheminer la lumière de la source de lumière (53) jusqu'à l'affichage (11), et une unité de commutateur tournant (1) ayant un curseur tournant (10) qui peut être déplacé autour d'un axe pour déplacer le guide de lumière (47), l'unité de commutateur (1) comprenant un bouton tournant (5) avec une tige de rotation (7) s'étendant jusqu'à l'intérieur du boîtier (3), la tige de rotation (7) étant fixée au curseur tournant (10), le bouton tournant (5) s'étendant à partir de la face avant (9) du boîtier (3) et l'affichage (11) étant espacé par rapport au bouton tournant (5) sur la face avant (9) du boîtier (3), caractérisé en ce que la source de lumière (53) est montée dans le boîtier (3) dans une position fixe, alignée avec la tige de rotation (7) mais espacée par rapport à celle-ci, et sur l'axe autour duquel le curseur tournant (10) de l'unité de commutateur (1) peut être déplacé, le guide de lumière (47) étant disposé dans un canal incliné (47) à l'intérieur du curseur tournant (10) de l'unité de commutateur (1), de façon que le guide de lumière (47) puisse être déplacé par rapport à la source de lumière (53), et en ce qu'au moins une extrémité (51) du guide de lumière (47) faisant face à la source de lumière (53) est approximativement fixe par rapport à la source de lumière (53), et l'extrémité opposée (55) du guide de lumière (47) peut être déplacée par rapport à l'affichage (11).

2. Indicateur selon la revendication 1, dans lequel l'affichage (11) est conçu pour être éclairé par l'arrière par le guide de lumière (47).

3. Indicateur selon la revendication 2, dans lequel l'affichage (11) comprend un ensemble de fenêtres (57) discrètes.

4. Indicateur selon la revendication 2, dans lequel l'affichage (11) comprend une fenêtre continue en forme de bande.

5. Indicateur selon l'une quelconque des revendications précédentes, dans lequel le guide de lumière comprend un tube rigide (49).

6. Indicateur selon la revendication 5, dans lequel le tube rigide (49) comporte un revêtement interne ou externe réfléchissant.

7. Indicateur selon la revendication 5, dans lequel le guide de lumière (47) a un indice de réfraction qui varie entre le centre du tube (49) et la surface extérieure du tube (49).

8. Indicateur selon la revendication 5, 6 ou 7, dans lequel une extrémité du tube rigide (49) est approximativement fixe par rapport à la source de lumière (53), et l'unité de commutateur (1) destinée à déplacer le guide de lumière est conçue pour déplacer le tube rigide (49) selon une trajectoire générale courbe, de façon qu'une seconde extrémité du tube rigide (49), éloignée de l'extrémité précitée, parcoure l'affichage (11).

9. Indicateur selon l'une quelconque des revendications 1-4, dans lequel le guide de lumière (47) est une fibre optique.

10. Indicateur selon la revendication 9, dans lequel la fibre optique est flexible.

11. Indicateur selon la revendication 10, dans lequel une extrémité de la fibre optique est approximativement fixe par rapport à la source de lumière (53), et l'unité de commutateur (1) destinée à déplacer le guide de lumière (47) courbe la fibre optique de façon qu'une seconde extrémité de la fibre optique, éloignée de l'extrémité précitée, se déplace de façon à parcourir l'affichage (11).

12. Un commutateur tournant comprenant un indicateur selon l'une quelconque des revendications précédentes.

13. Un potentiomètre tournant comprenant un indicateur selon l'une quelconque des revendications 1·11.
